# EUROPÄISCHE PATENTSCHRIFT

(11) **EP 0 889 277 B1**
(45) Veröffentlichungstag und Bekanntmachung des Hinweises auf die Patenterteilung: **09.07.2003**
(21) Anmeldenummer: 98109159.8
(22) Anmeldetag: 20.05.1998
(51) Int. Cl.: F16M 1/00

(54) **Kombinierte Verbindung für horizontal geteilte Gehäuse**
Fastening assembly for horizontally split casings
Connexion d'assemblage pour cartus divisés horizontalement

(30) Priorität: 05.07.1997 DE 19728779
(43) Veröffentlichungstag der Anmeldung: 07.01.1999
(73) Patentinhaber: MAN Turbomaschinen AG, 46145 Oberhausen (DE)
(72) Erfinder: Kotzur, Joachim, 46145 Oberhausen (DE); Schlemenat, Alfred, 45701 Herten (DE); Woelk, Gerd-Ulrich Dr.-Ing, 46147 Oberhausen (DE)
(74) Vertreter: Radünz, Ingo, Dipl.-Ing.

(56) Entgegenhaltungen:
- EP-A- 0 775 863
- DE-B- 1 009 638
- US-A- 3 390 830

## Beschreibung

Die Erfindung betrifft ein horizontal geteiltes Gehäuse mit Flanschverbindung der beiden Gehäusehälften nach Art der US 3 390 830 A.

Horizontal geteilte Gehäuse werden beispielsweise bei Turbomaschinen verwendet, wenn ein kompletter Rotor in das Gehäuse einzulegen ist. Die beiden Gehäusehälften werden nach dem Stand der Technik über an der Verbindungsstelle angeordnete Teilfugenflansche mit Schrauben verbunden und dadurch nach außen abgedichtet.

Das Gehäuse ist im allgemeinen Beanspruchungen durch Innendruck und Innentemperatur ausgesetzt, die in Grenzfällen zu Gehäuseverformungen, verbunden mit einem Klaffen der Teilfuge, insbesondere an den Stirnseiten des Gehäuses im Bereich der Wellendichtung, führen können. Dort lassen sich aus Platzgründen die Teilfugenschrauben nicht dicht genug an der Wellendichtung anordnen, um eine ausreichende Dichtwirkung zwischen den Gehäuseflanschen und im Falle einer horizontal geteilten Wellendichtung auch an deren Teilfläche zu bewirken.

Aufgabe der Erfindung ist es, für Gehäuse mit horizontaler Teilfuge am gesamten Umfang der Teilfuge eine kraft- und formschlüssige Verbindung zu schaffen.

Dies gelingt nach der Erfindung durch eine kombinierte Verbindung von Gehäuseoberteil und Gehäuseunterteil. Hiernach wird das Gehäuseoberteil mit dem Gehäuseunterteil am Umfang des horizontalen Teilfugenflansches mit Teilfugenschrauben verschraubt und es wird an einer oder beiden Stirnseiten des Gehäuseoberteils und Gehäuseunterteils eine Gehäuseverlängerung im Bereich der Gehäuseachse angebracht, die am Außenumfang von einem koaxial angeordneten horizontal ungeteilten Ring umfaßt wird.

Die Gehäuseverlängerung kann beispielsweise auch durch radiale Rippen oder in ähnlicher Weise gebildet werden. Sofern z.B. eine zylinderähnliche Ausbildung der Verlängerung gewählt wird, könnte diese durch Rippen verstärkt werden.

Um eine bessere Lösbarkeit des ungeteilten Ringes zu erreichen, werden in einer weiteren Ausgestaltung der Erfindung, zwischen in dem Ring und Bund der Gehäuseverlängerung angebrachten Flächen keilförmige Spannelemente mit entsprechenden Flächen angeordnet, die mittels Zugschrauben zwischen in dem Ring angeordneten Flächen und gegenüberliegenden Flächen des Bundes der Gehäuseverlängerung verspannt sind.

Wird die Anlagefläche zwischen Bund der Gehäuseverlängerung radial eben ausgeführt, werden vom Ring nur radiale Verformungskräfte übertragen.

In diesem Zusammenhang sei darauf hingewiesen, daß aus dem Behälterbau die EP 0 775 863 A1 bekannt ist, die für rotationssymmetrische Bauteile eine kraft- und formschlüssige, aber auch leicht lösbare Verbindung beschreibt. Danach wird an Zylinderansätzen radial geteilter Behälterhälften zwischen den Kontaktflächen eine Vielzahl kleiner Spannelemente mittels Zugschrauben verspannt, welche die in Richtung der Behälterachse durch Überdruck erzeugten Zugkräfte aufnehmens und dadurch eine Abdichtung am Behälterumfang bewirken sollen.

Bei der hier beschriebenen erfindungsgemäßen Verbindung kann es je nach Platzverhältnis und Kräfteverteilung zweckmäßig sein, die Anlagefläche zwischen Bund, der Gehäuseverlängerung und dem Ring konisch auszuführen und die Achse der Zugschrauben entsprechend zu neigen. Dabei kann die Fläche am Bund eine radial ebene Fläche werden.

Bei konischer Anlagefläche treten zusätzlich zu den radialen Kräften axiale Kräfte in den Ring und am Bund der Gehäuselagerung auf.

Zum leichteren Lösen der Spannelemente können in den Bohrungen für die Zugschrauben Gewinde für Abdrückschrauben vorgesehen werden.

Die Anlageflächen der Spannelemente und deren Gegenflächen am Bund und im Ring können eben sein oder der Form der begrenzenden Ringfläche, im allgemeinen Konusfläche, angepaßt sein.

Die Zahl der Spannelemente und der Zugschrauben ist jeweils dem betreffenden Bedarfsfall angepaßt.

Die Gehäuseverlängerung und deren Bund können mit dem Gehäuseoberteil und dem Gehäuseunterteil aus einem Stück gegossen sein. Sie können aber auch durch Schweißen, Löten oder Verschrauben daran angebracht sein.

Bei der Dimensionierung des Ringes sind sämtliche Betriebszustände im Gehäuse zu berücksichtigen, auch transiente Vorgänge.

Das Material des Ringes, der auch aus mehreren Ringen zusammengesetzt werden kann, ist den Betriebsbedingungen angepaßt. Ein von dem Material des Gehäuses abweichender Wärmedehnungskoeffizient und eine unterschiedliche Duktilität werden bei der Optimierung des Ringes berücksichtigt.

Ausführungsbeispiele der erfindungsgemäßen kombinierten Verbindung für horizontal geteilte Gehäuse werden nachstehend an Hand der schematischen Zeichnungen erläutert.

Es zeigen
- Fig.1: zum Stand der Technik die Ansicht auf die Teilfuge eines horizontal geteilten Gehäuses,
- Fig.2: einen Schnitt durch ein Gehäuse nach der Erfindung,
- Fig.3: eine Ausführung mit zusätzlicher Verschraubung im Bereich der Wellendichtung als Schnitt,
- Fig.4: eine Variante zu Fig.3,
- Fig.5: eine Zugschraube mit zusätzlicher Bohrung für eine Abdrückschraube,
- Fig.6: eine Zugschraube mit aufgesetzter Abdrückschraube und
- Fig.7: eine stirnseitige Ansicht eines horizontal geteilten Gehäuses.

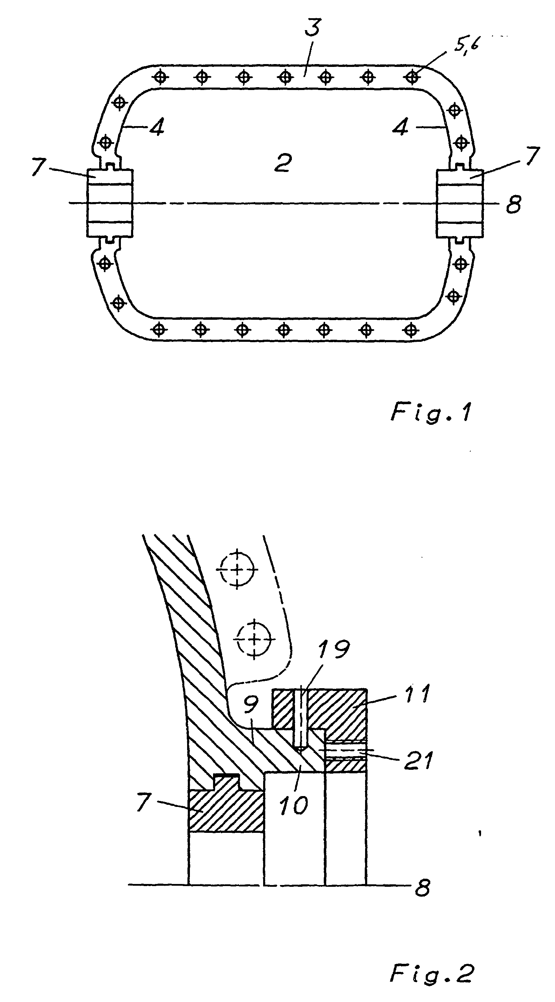

Fig.1 zeigt die Ansicht auf die Teilfuge eines horizontal geteilten Gehäuses nach dem Stand,der Technik mit im Teilfugenflansch (3) angeordneten Bohrungen (6) für die Teilfugenschrauben (5). An den Stirnseiten (4) sind die Wellendichtungen (7) in das Gehäuseunterteil (2) eingesetzt.

Fig. 2 zeigt einen Schnitt durch ein erfindungsgemäßes Gehäuse im Bereich der Wellendichtung (7). Über dem Bund (10) der hier koaxialen zylindrischen Gehäuseverlängerung (9) ist ein einteiliger Ring (11) angeordnet, der durch Stifte (19) axial gesichert ist. Zum Abdrücken von Ring (11) ist eine Bohrung (21) für eine (nicht dargestellte) Abdrückschraube vorgesehen.

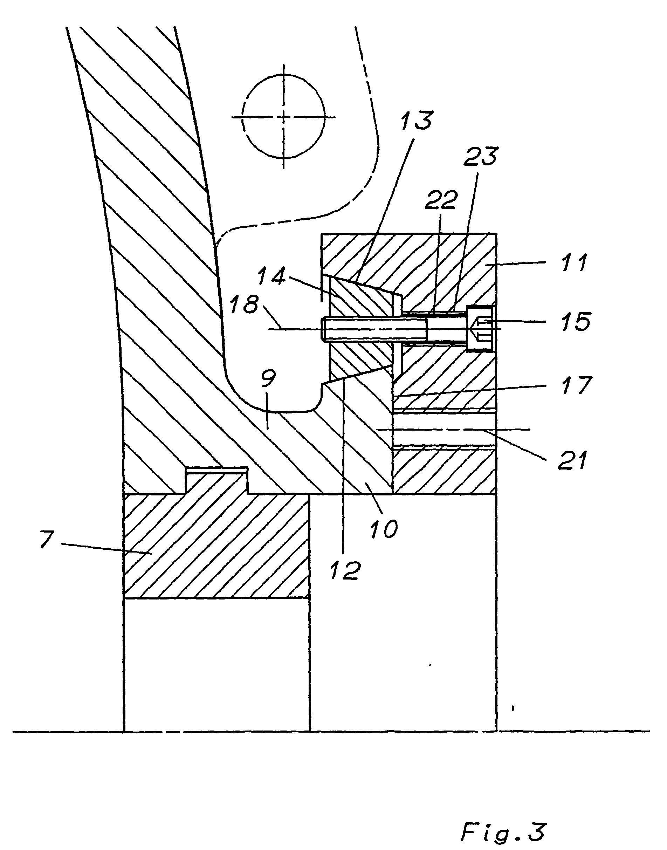

Aus Fig.3 geht die Ausführung der zusätzlichen Verschraubung im Bereich der Wellendichtung (7) hervor. Über dem Bund (10) der Gehäuseverlängerung (9) ist der ungeteilte Ring (11) angeordnet. Mit Spannelementen (14) wird über Zugschrauben (15) der Ring (11) gegen die radiale Anlagefläche (17) gezogen. Eine Gewindebohrung (21) ist hier für eine Abdrückschraube vorgesehen. In der Bohrung (22) für die Zugschraube (15) ist ebenfalls ein Gewinde (23) für eine Abdrückschraube eingebracht.

Selbstverständlich sind auch andere Ausführungen der Zugschrauben, z.B. Durchgangsschrauben mit Mutter usw. möglich.

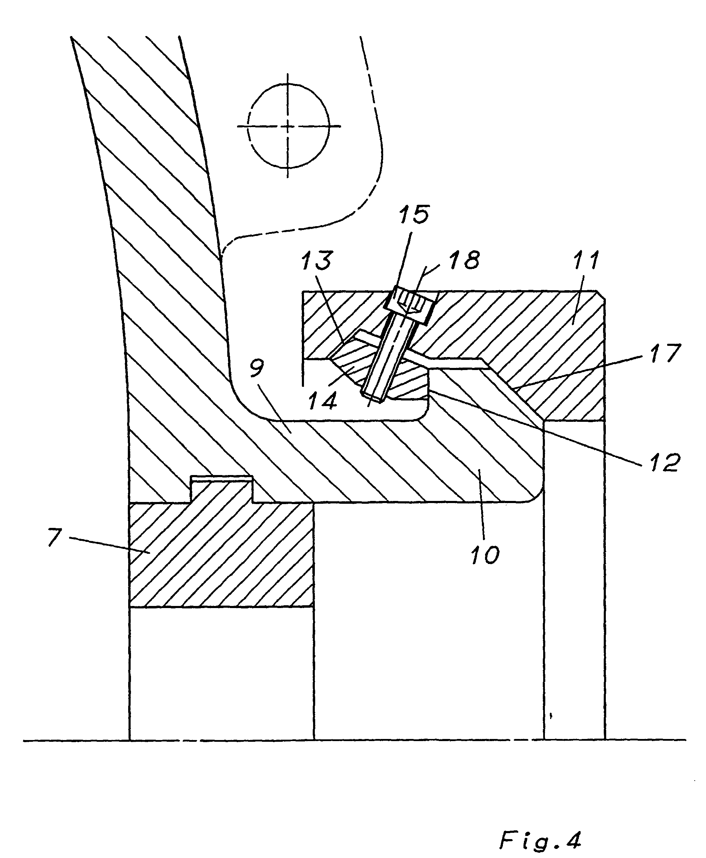

Fig.4 zeigt eine Ausführung der zusätzlichen Verschraubung im Bereich der Wellendichtung (7). Hierbei ist die Anlagefläche (17) konisch ausgeführt. Zugschrauben (15) und Spannelemente (14) sind bei dieser Ausführung geneigt angeordnet.

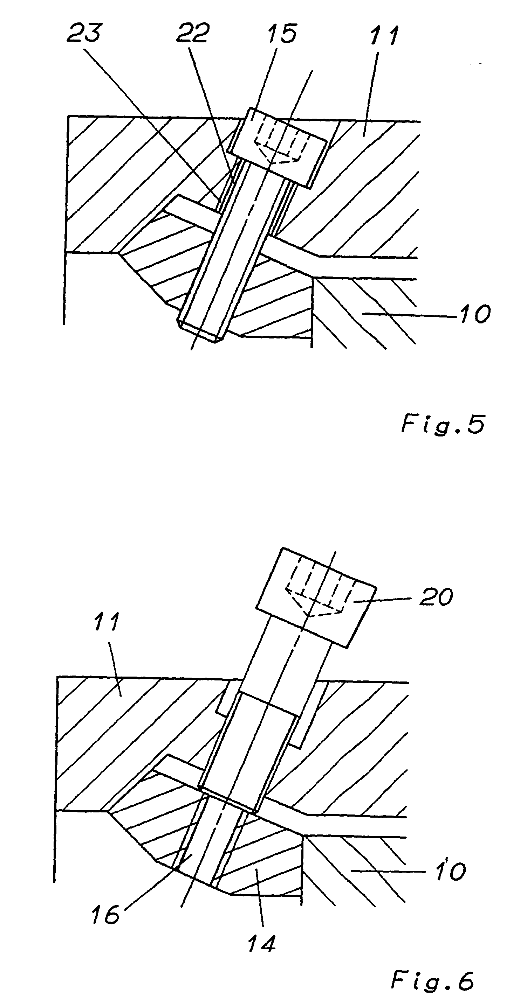

Die Figuren 5 und 6 zeigen ein zusätzliches Gewinde (23) für Abdrückschrauben (22) in der Bohrung (22) für die Zugschraube (15).

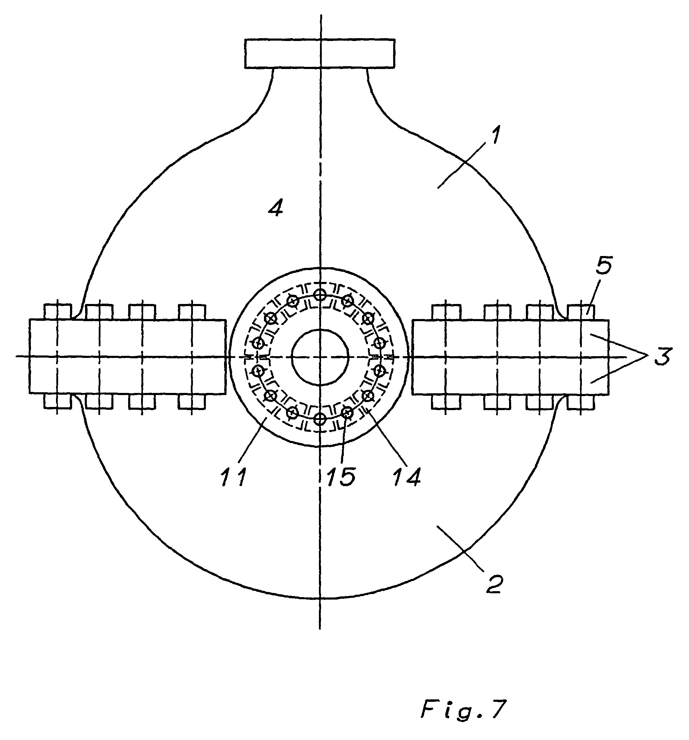

Fig.7 zeigt eine stirnseitige Ansicht eines horizontal geteilten Gehäuses, bei dem Gehäuseoberteil (1) und Gehäuseunterteil (2) über Teilfugenflansche (3) und Teilfugenschrauben (5) verschraubt sind und wobei im achsnahen Bereich ein ungeteilter Ring (11) angeordnet ist, der wie in Fig.3 dargestellt, mit Spannelementen (14) und Zugschrauben (15) bestückt ist.

### Bezugsziffernliste:

- 1: Gehäuseoberteil
- 2: Gehäuseunterteil
- 3: Gehäuse-Teilfugenflansch
- 4: Gehäusestirnseite
- 5: Teilfugenschraube
- 6: Bohrung für Teilfugenschraube
- 7: Wellendichtung
- 8: Gehäuseachse
- 9: stirnseitige Gehäuseverlängerung
- 10: Bund der Gehäuseverlängerung
- 11: horizontal ungeteilter Ring
- 12: Fläche an 10
- 13: Fläche in 11
- 14: keilförmiges Spannelement
- 15: Zugschraube
- 16: Bohrung für 15 in 14
- 17: Anlagefläche zwischen 10 und 11
- 18: Achse der Zugschraube 15
- 19: Stift
- 20: Abdrückschraube
- 21: Gewindeloch für Abdrückschraube
- 22: Bohrung für 15 in 11
- 23: Gewinde in 22

## Patentansprüche

1. Horizontal geteiltes Gehäuse mit Flanschverbindung der beiden Gehäusehälften, wobei
das Gehäuseoberteil (1) mit dem Gehäuseunterteil (2) am Umfang des horizontalen Teilfugenflansches (3) mit Teilfugenschrauben (5) verschraubt und an einer oder beiden Stirnseiten (4) des Gehäuseoberteiles (1) und des Gehäuseunterteiles (2) eine ebenfalls horizontal geteilte Gehäuseverlängerung(9) im Bereich der Gehäuseachse (8) angeordnet ist, **dadurch gekennzeichnet, daß** die Gehäuseverlängerung (9) am Außenumfang von einem koaxial angeordneten horizontal ungeteilten Ring (11) umfaßt ist.

2. Horizontal geteiltes Gehäuse nach Anspruch 1,
**dadurch gekennzeichnet,**
**daß** zwischen in dem Ring (11) und Bund (10) der Gehäuseverlängerung (9) angebrachten Flächen
(12, 13) keilförmige Spannelemente (14) mit entsprechenden Flächen angeordnet sind, die mittels Zugschrauben (15) zwischen in dem Ring (11) angeordneten Flächen (13) und gegenüberliegenden Flächen (12) des Bundes (10) der Gehäuseverlängerung (9) verspannt sind.

3. Horizontal geteiltes Gehäuse nach den Ansprüchen 1 und 2,
**dadurch gekennzeichnet,**
**daß** die Anlageflächen (17) zwischen Bund (10) der Gehäuseverlängerung (9) und Ring (11) radial eben ausgeführt sind.

4. Horizontal geteiltes Gehäuse nach Anspruch 1 und 2,
**dadurch gekennzeichnet,**
**daß** die Anlagefläche (17) zwischen Bund (10) der Gehäuseverlängerung (9) und des Ringes (11) konisch ausgeführt und die Achse (18) der Zugschrauben (15) in entgegengesetzter Richtung gegenüber der Gehäuseachse (8) geneigt ist.

5. Horizontal geteiltes Gehäuse nach den Ansprüchen 2 bis 4,
**dadurch gekennzeichnet,**
**daß** in der Bohrung (22) für die Zugschraube (15) ein Gewinde (23) für eine Abdrückschraube (20) eingebracht ist.

## Claims

1. Horizontally divided housing with a flange connection of the two housing halves, wherein the housing upper part (1) is screw-connected with the housing lower part (2) at the circumference of the horizontal parting joint flange (3) by parting joint screws (5) and a similarly horizontally divided housing extension (9) is arranged at one or both end faces (4) of the housing upper part (1) and the housing lower part (2) in the region of the housing axis (8) **characterised in that** the housing extension (9) is enclosed at the outer circumference by a coaxially arranged horizontally undivided ring (11).

2. Horizontally divided housing according to claim 1, **characterised in that** arranged between surfaces (12, 13) formed in the ring (11) and collar (10) of the housing extension (9) are wedge-shaped clamping elements (14) with corresponding surfaces, which are tightened by means of drawing-in screws (15) between surfaces (13) arranged in the ring (11) and opposite surfaces (12) of the collar (10) of the housing extension (9).

3. Horizontally divided housing according to claims 1 and 2, **characterised in that** the contact surfaces (17) between collar (10) of the housing extension (9) and ring (11) are formed to be radially planar.

4. Horizontally divided housing according to claim 1 and 2, **characterised in that** the contact surface (17) between collar (10) of the housing extension (9) and the ring (11) is formed to be conical and the axis (18) of the drawing-in screws (15) is inclined in opposite direction relative to the housing axis (8).

5. Horizontally divided housing according to claims 2 to 4, **characterised in that** a thread (23) for a pulling-off screw (20) is formed in the bore (22) for a drawing-in screw (15).

## Revendications

1. Carter divisé horizontalement avec assemblage bridé des deux moitiés de carter, dans lequel la pièce de carter supérieure (1) est vissée avec la pièce de carter inférieure (2) sur le pourtour de la bride d'assemblage (3) horizontale par des vis d'assemblage (5) et un prolongement de carter (9) également divisé horizontalement est disposé sur l'une ou les deux faces frontales (4) de la pièce de carter supérieure (1) et de la pièce de carter inférieure (2) dans la zone de l'axe de carter (8),
**caractérisé en ce**
**que** le prolongement de carter (9) est entouré sur le pourtour extérieur par un anneau (11) non divisé horizontalement disposé coaxialement.

2. Carter divisé horizontalement selon la revendication 1,
**caractérisé en ce**
**qu'**entre des surfaces (12, 13) ménagées dans l'anneau (11) et l'embase (10) du prolongement de carter (9) sont disposés des éléments de serrage (14) en forme de coin présentant des surfaces correspondantes, qui sont serrés au moyen de vis de traction (15) entre des surfaces (13) disposées dans l'anneau (11) et des surfaces en regard (12) de l'embase (10) du prolongement de carter (9).

3. Carter divisé horizontalement selon les revendications 1 e 2,
**caractérisé en ce**
**que** les surfaces de contact (17) entre l'embase (10) du prolongement de carter (9) et l'anneau (11) ont une configuration radiale plane.

4. Carter divisé horizontalement selon la revendication 1 et 2,
**caractérisé en ce**
**que** la surface de contact (17) entre l'embase (10) du prolongement de carter (9) et l'anneau (11) a une configuration conique et l'axe (18) des vis de traction (15) est incliné dans le sens opposé par rapport à l'axe de carter (8).

5. Carter divisé horizontalement selon les revendications 2 à 4,
**caractérisé en ce**
**que** dans le perçage (22) pour la vis de traction (15) est ménagé un taraudage (23) pour une vis d'expulsion (20).
